# EUROPÄISCHE PATENTSCHRIFT

(11) **EP 2 493 760 B1**
(45) Veröffentlichungstag und Bekanntmachung des Hinweises auf die Patenterteilung: **16.10.2013**
(21) Anmeldenummer: 10771082.4
(22) Anmeldetag: 20.10.2010
(51) Int. Cl.: B64D 11/00

(54) **STAUFACHMODUL MIT INTEGRALEM VERSORGUNGSKANAL FÜR OPTIMIERTE MONTAGE**
STORAGE COMPARTMENT MODULE WITH AN INTEGRATED SUPPLY CHANNEL FOR OPTIMIZED INSTALLATION
MODULE COMPARTIMENT DE RANGEMENT DOTÉ D'UN CANAL DE SERVICE PASSAGERS INTÉGRÉ DE MONTAGE OPTIMISÉ

(30) Priorität: 30.10.2009 DE 102009051362; 30.10.2009 US 280167 P
(43) Veröffentlichungstag der Anmeldung: 05.09.2012
(73) Patentinhaber: Airbus Operations GmbH, 21129 Hamburg (DE)
(72) Erfinder: SCHNEIDER, Uwe, 21635 Jork (DE); GERBER, Thorsten, 22309 Hamburg (DE)
(74) Vertreter: Maiwald Patentanwalts GmbH
(86) Internationale Anmeldenummer: PCT/EP2010/065797
(87) Internationale Veröffentlichungsnummer: WO 2011/051148

(56) Entgegenhaltungen:
- EP-A1- 1 216 920
- EP-A1- 1 293 383
- EP-A2- 0 861 781
- DE-A1-102007 030 331
- US-A1- 2007 095 980

## Beschreibung

### Gebiet der Erfindung

Die Erfindung betrifft ein Hatrack bzw. ein Staufachmodul sowie ein Verfahren zur Installation desselben. Insbesondere betrifft die Erfindung ein Staufachmodul mit integralem Versorgungskanal für eine optimierte Montage. Außerdem betrifft die Erfindung die Verwendung eines Staufachmoduls in einem Flugzeug oder Fahrzeug sowie ein Flugzeug mit einem Staufachmodul.

### Hintergrund der Erfindung

Zur Versorgung von Flugzeugpassagieren mit Notfallsauerstoff, Zuluft und/oder elektrischen Systemen ist über den Sitzreihen in Flugrichtung ein mit Funktionspaneelen sowie sogenannten funktionslosen Infillpanelen aufgereihter PSC-Kanal (Passenger Service Channel) vorgesehen. Zur Befestigung jeglicher Paneele ist ein Zweischienensystem üblich, welches wiederum am Staufachmodul befestigt ist, in das die Paneele in Flugrichtung verschiebbar mit Haltern verrastet sind. Hierbei ist die Position im Querschnitt (Y/Z-Koordinate) stets eindeutig, die in Flugrichtung (X-Koordinate) aber vom gewünschten Kabinen- oder Sitzlayout abhängig.

Die Anordnung der PSC-Funktionspaneele in Flugrichtung muss somit individuell für jedes Flugzeuglayout bezüglich der Sitzposition erfolgen, damit der Passagier bequem vom Sitz aus jegliche Funktionalität nutzen kann.

Derzeit sind für Passagierflugzeuge der A320-Klasse keine beweglichen lateralen Staufächer bekannt. Dies ist ursächlich darauf zurückzuführen, dass die Platzverhältnisse der jeweiligen Querschnitte keine großzügigen Arrangements mit Schwenkbereichen erlauben. Um ein ausreichendes Schwenken eines Staufachs um die Flugzeug-X-Achse zu erlauben, müsste bei einem einfach gelagerten Staufach der Flugzeugrumpf aufgebrochen werden. Dies bedeutet, dass der Flugzeugrumpf von seiner idealen kreisrunden Form allzu sehr abweichen müsste. Einfache drehbar gelagerte Staufächer sind bekannt aus der A380 und der A350. Aufgrund der größeren Rumpfdurchmesser tritt hier das Problem des erforderlichen Schwenkbereichs nicht in den Vordergrund, allerdings liegt hier zum Teil der Drehpunkt so weit fern vom Schwerpunkt, dass Handkräfte und Ergonomie eingeschränkt sind.

Der derzeitige Installationsablauf von PSUs (Passenger Service Units) beginnt im Anschluss an die Staufach-Montage mit dem Einklinken der rumpfseitigen Verschlüsse in den sogenannten PSC-Schienen, wobei diese dann aufgeklappt, das heißt senkrecht nach unten hängend in den PSC-Schienen auf Stoß zusammengefahren werden. In dieser Endposition werden dann an den Funktionspaneelen die elektrischen Stecker und Luftanschlüsse verbunden, welche in der Regel an der Unterseite der Hatracks oder direkt an der Struktur gehalten sind. Bevor die noch hängenden PSU in die horizontale Endposition geklappt werden, müssen erst alle Kabel und Schläuche gemäß Bauvorschrift geschützt, durchhangfrei aufgebunden und gehalten werden.

In der DE 10 2007 030331 A1 sowie der WO 2009 003945 A1 ist ein Staufachmodul beschrieben für einen Innenraum eines Flugzeugs, wobei das Staufachmodul mindestens einen Behälter und mindestens ein Gehäuse zur Aufnahme des Behälters aufweist, und wobei in das Gehäuse mindestens ein Passagier-Versorgungskanal integriert ist. Dieser weist eine Montageöffnung auf.

### Zusammenfassung der Erfindung

Es ist eine Aufgabe der Erfindung, ein Staufachmodul bereitzustellen, welches leichter zu montieren ist.

Diese und weitere Aufgaben werden durch den Gegenstand der jeweiligen unabhängigen Ansprüche erfüllt. Weitere Ausführungsformen sind in den jeweiligen abhängigen Ansprüchen beschrieben.

Im Allgemeinen weist ein Staufachmodul gemäß der Erfindung ein Gehäuse mit einem Staufach-Aufnahmeraum und einem Passagier-Versorgungskanal, ein Staufach mit seitlich angeordneten Führungselementen und zumindest ein Passagier-Versorgungselement auf, wobei an den Seitenwänden des Staufach-Aufnahmeraums jeweils ein Lagerungselement angeordnet ist, und wobei in einer Wand des Gehäuses zumindest eine Durchgriffsöffnung ausgebildet ist, und wobei die Führungselemente des Staufachs in Eingriff mit den Lagerungselementen an dem Gehäuse bringbar sind.

Im Gegensatz zu der sehr zeitaufwendigen und unergonomischen Installation eines kompletten Hatracks mit anschließend zu installierendem Versorgungskanal (oder auch eines kompletten vorkonfigurierten Hatrackmoduls) wird hier der Montageablauf nach den spezifischen Bedürfnissen einer Hatrackmontage in einem beengten Flugzeugrumpf und die notwendige individuelle Bestückung des Versorgungskanals in zwei Arbeitsschritte gesplittet. Durch die verbesserte Zugänglichkeit sind diese Arbeitsschritte erheblich beschleunigt und auch in Arbeit erleichternder Position zu erledigen. Die Durchgriffsöffnung zum Erreichen der Befestigungselemente auf der Strukturseite der Staufachmodulgehäuse erleichtern das Montieren und Ausrichten des Gehäuses erheblich.

Gemäß einer Ausführungsform der Erfindung ist eine Durchgriffsöffnung in einer Rückwand des Gehäuses ausgebildet. Auf diese Weise können die an der Strukturseite des Staufachmodulgehäuses befindlichen Halter mit Tie-rods besser mit der Rumpfstruktur des Flugzeugs verbunden werden.

Gemäß der Erfindung ist die Durchgriffsöffnung in einer Wand des Gehäuses zwischen dem Staufach-Aufnahmeraum und dem Passagier-Versorgungskanal ausgebildet. Wenn der Versorgungskanal mit den PSUs bestückt und in horizontaler Endposition verrastet wird, kann durch die Durchgriffsöffnung im Gehäuse ein einfaches und ergonomisches Verbinden der PSUs zu den Elektrik-, Sauerstoff- und Individual-Air-Anschlüssen in Augenhöhe ermöglicht werden.

Ferner wird eine erhebliche Gewichtsersparnis ermöglicht, da für die Passenger Service Units (PSUs) weder klappbare Scharniere noch Kabel- oder Schlauchüberlängen mit entsprechenden Scheuerschutzhüllen und deren separaten Haltern zum Anbringen erforderlich sind. Das Verbinden der PSU in deren tatsächlicher Endposition kann somit auf einfache und sichere Weise gewährleistet werden.

Gemäß einer Ausführungsform der Erfindung sind die Lagerungselemente am Staufach-Aufnahmeraum Führungsschienen und die Führungselemente des Staufachs Rollen, wobei an beiden Seiten des Staufachs jeweils zwei Rollen derart angeordnet sind, dass das Staufach zwischen einer offenen und einer geschlossenen Position entlang der Führungsschienen bewegbar ist. Mit anderen Worten wird die Bewegung des Staufachs zwischen einer offenen und einer geschlossenen Position mittels eines Kurvengetriebes realisiert, welches über zwei Rollen und eine korrespondierende Schiene gestaltet ist.

Es wird angemerkt, dass die Lagerungselemente auch beispielsweise eine Aufnahme für eine Bewegungsachse eines Staufachs sein können, oder irgendein anderes geeignetes Lagerungselement zur bewegbaren Lagerung eines Staufachs. An dem Staufach können korrespondierende Elemente vorgesehen sein.

Im Anschluss an die Befestigung des Gehäuses an der Flugzeugwand sowie im Anschluss an das Einsetzen der PSUs in den Passagier-Versorgungskanal wird ein Staufach zum Beispiel mittels Einführung der an den Staufachseiten befindlichen Rollen in die korrespondierenden Führungsschienen des Gehäuses montiert. Hierbei können sogenannte Einführschrägen an den Führungsschienen eine Ein-Mann-Montage des Staufachs unterstützen.

Für den Fall eines Staufachs mit beweglichem Drehpunkt, das eine platzsparende Bewegung zwischen zwei idealen Endpositionen ermöglicht, erlaubt das Staufachmodul gemäß einer Ausführungsform der Erfindung die Realisierung eines komplexen Verfahrwegs auf einer geschlossenen Schiene (eine pro Seite) mit jeweils zwei Lagerpunkten (kugelgelagerte Polyamidrollen). Da die Schienen an den Gehäuseseiten aus der Randfläche herausgeführt werden, ist eine einfache Ein-Mann-Montage des rollengeführten Staufachs über Selbstfindung (Einführschrägen) an den Schienen möglich.

Der Verfahrweg beim Öffnen (erste Phase) kann so gewählt sein, dass der Drehpunkt zunächst fern des Schwerpunkts zur Strukturseite liegt, um ein garantiertes und schnelles selbsttätiges Öffnen des Staufachs zu gewährleisten, und kontinuierlich zum Schwerpunkt hinwandert. Der weitere Verfahrweg beim Öffnen kann so gewählt sein, dass der Drehpunkt sich dem Schwerpunkt kontinuierlich annähert, um eine weitere gravitationsbedingte Beschleunigung zu unterbinden.

Der weitere Verfahrweg beim Öffnen (zweite Phase) kann zu einem Drehpunktwechsel über den Schwerpunkt hinweg in Richtung Passagier führen. Hierbei wird die Geschwindigkeit des Staufachs abgebremst, um die kinetische Energie vor Erreichen der Endposition zu tilgen.

Der weitere Verfahrweg beim Öffnen (dritte Phase) kann nun so gewählt sein, dass der Drehpunkt zurück über den Schwerpunkt zur Strukturseite wandert, um eine sichere Lagerung der Schütte in voll geöffneter Endposition zu gewährleisten.

Beim Verschließen kann eben dieser Drehpunktwechsel, wahrnehmbar als Rückmeldung bzw. Widerstand, wieder überwunden werden. Nach Überwinden dieses Widerstands kann der Verfahrweg beim Schließen so gewählt sein, dass der Drehpunkt fern des Schwerpunkts auf Strukturseite wandert, das heißt, das Gewicht des Staufachs unterstützt den Passagier beim Überwinden der Masseträgheit. Der weitere Verfahrweg bis zum endgültigen Verschließen kann ferner so gewählt sein, dass nach Erreichen einer gewissen Bewegungsenergie durch die vorherige Beschleunigungsphase das endgültige Verschließen mit geringer Handkraft zu realisieren ist.

Gemäß einer weiteren Ausführungsform der Erfindung weist das Staufachmodul ferner einen Verschlussstopfen auf, welcher geeignet ist, ein Ende einer Führungsschiene zu verschließen, wobei die Verschlussstopfen korrespondierend zu Einführschrägen an den Enden der Führungsschienen konische Verschlussstopfen sein können. Die Verschlussstopfen können ferner mittels Madenschrauben gehalten werden und sind zugleich mit Gummidämpfern zur Anschlagsdämpfung ausgeführt.

Gemäß einer weiteren Ausführungsform der Erfindung kann das Passagier-Versorgungselement eine Sauerstoff-Versorgungsbox, ein Lautsprecher, eine Kopfhörerbuchse, eine Leuchte, ein Luftauslass für Luftversorgung, eine USB-Buchse, eine Computerbuchse und/oder einfach ein Verkleidungsteil sein.

Das Staufachmodul kann ferner eine Verriegelung aufweisen, so dass das Staufach in einer geschlossenen Stellung in dem Gehäuse arretierbar ist.

An dieser Stelle sei darauf hingewiesen, dass die Durchgriffsöffnungen sowie die Kabel und Schläuche der PSUs und deren Rückseite nach der Montage des Staufachs für einen Passagier nicht mehr zu sehen sind, dass akustische Nachteile durch die geschlossene Kontur der Seitenverkleidung mit dem PSC, dem Staufachmodulgehäuse und dem Staufach zum Deckenlining nicht zu erwarten sind, und dass Servicearbeiten an den PSUs lediglich den Ausbau des Staufachs erfordern, was von einer Person innerhalb von Sekunden erledigt werden kann.

Gemäß einer weiteren Ausführungsform der Erfindung ist der Bewegungsweg des Staufachs mittels der Führungsschienen so bestimmt, dass während des Öffnens oder des Schließens des Staufachs, d.h. in jeder Position des Staufachs zwischen einer offenen und einer geschlossenen Position, ein im Wesentlichen konstanter Spalt zwischen einer Außenseite des Staufachs und einem Rand des Staufachgehäuses vorliegt. Auf diese Weise kann gewährleistet werden, dass in jeder Stellung des Staufachs relativ zum Staufachgehäuse ein gleichmäßiger optischer Übergang zwischen dem Staufach und dem Staufachgehäuse und auch den Innen-Verkleidungspaneelen gegeben ist. Ferner wird gewährleistet, dass die rückwärtig angeordneten Elemente und Strukturen des Staufachmoduls zu keiner Zeit sichtbar sind.

Das Staufach, das Staufachgehäuse und die Führungsschienen können auch so aufeinander abgestimmt sein, dass an allen Seiten des Staufachs, also an den seitlichen, der oberen und der unteren Außenseite, ein konstanter Spalt realisiert ist, sodass neben den optischen Aspekten auch eine Luftdämpfung der Bewegung des Staufachs bereitgestellt wird.

Das heißt, dass der Staufach-Aufnahmeraum ein Luftpuffer erzeugt, wenn das Staufach von einer geöffneten in eine geschlossene Position bewegt wird, da die hinter dem Staufach befindliche Luft nicht schnell genug durch den Spalt zwischen Staufach und Staufachgehäuse entweichen kann. Andererseits kann nicht schnell genug Luft in den Staufach-Aufnahmeraum einströmen, wenn das Staufach aus einer geschlossenen Position in eine geöffnete Position bewegt wird, sodass auch hierbei die Bewegung sanft gebremst bzw. gedämpft wird.

Um den Bewegungs-Dämpfungseffekt von benachbarten Strukturen unabhängig zu verwirklichen, kann gemäß einer weiteren Ausführungsform der Erfindung eine oder mehrere Verschlussplatten vorgesehen sein, mit Hilfe derer eine oder mehrere Durchgriffsöffnungen verschließbar sind.

Eine Einstellbarkeit der Bewegungsdämpfung kann durch ein Ventil realisiert sein, welches einen Zustrom von Luft in den Staufach-Aufnahmeraum bzw. ein Ausströmen der Luft aus dem Staufach-Aufnahmeraum beeinflusst. Ein solches Ventil kann entweder in einer Wand des Staufach-Aufnahmeraums oder in einer Verschlussplatte vorgesehen sein. Es wird angemerkt, dass auch mehrere Ventile vorgesehen sein können.

Weiterhin kann ein Ventil für das Ausströmen unterschiedlich zu einem Ventil für das Einströmen von Luft sein, oder ein Ventil kann so gestaltet sein, dass die Ventileigenschaften der beiden entgegengesetzten Strömungsrichtungen unterschiedlich sind. Hierbei ist es auch möglich, dass das Ventil eine der Strömungsrichtung vollständig verschließen kann. Ein Beispiel hierfür ist weiter unten beschrieben.

Ferner kann das Ventil eine konstante sowie eine regelbare Durchlassöffnung aufweisen. Das Ventil kann eine oder mehrere steife wie auch flexible Ventilklappen aufweisen, oder auch eine Kombination derselben.

Gemäß einem weiteren Aspekt der Erfindung weist ein Verfahren zur Installation eines Staufachmoduls wie oben beschrieben folgende Schritte auf: Befestigen des Gehäuses des Staufachmoduls an der Struktur des Flugzeugs, Einsetzen des zumindest einen Passagier-Versorgungselements in den Passagier-Versorgungskanal des Gehäuses, Verbinden etwaiger Anschlüsse des Passagier-Versorgungselements mit Versorgungsleitungen des Flugzeugs, Einsetzen eines Staufachs in den Staufachaufnahmeraum des Gehäuses, wobei die Führungselemente an dem Staufach in die Lagerungselemente am Gehäuses eingreifen.

Es ist angemerkt, dass Ausführungsformen der Erfindung unter Bezugnahme auf unterschiedliche Gegenstände beschrieben sind. Insbesondere sind einige Ausführungsformen in Bezugnahme auf Verfahrens-Ansprüche beschrieben, wohingegen andere Ausführungsformen unter Bezugnahme auf Vorrichtungs-Ansprüche beschrieben sind. Jedoch wird ein Fachmann aus der vorangegangenen und der folgenden Beschreibung entnehmen, solange nicht anders festgestellt, dass zusätzlich zu jeder Kombination von Merkmalen, welche zu dem einen Typ von Gegenständen gehört, ebenfalls jede Kombination zwischen Merkmalen bezüglich der unterschiedlichen Gegenstände als hierin offenbart gelten.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

Figur 1 zeigt ein Staufachmodul gemäß einer Ausführungsform der Erfindung ohne das Staufach bzw. ein Passagier-Versorgungselement.
Figur 2 zeigt das Staufachmodul aus Figur 1 mit einem eingebauten Passagier-Versorgungselement.
Figur 3 zeigt das Staufachmodul aus Figur 1 mit angeschlossenem Passagier-Versorgungselement.
Figur 4 zeigt das Staufachmodul aus Figur 1 mit einem Staufach bei Beginn der Montage des Staufachs.
Figur 5 zeigt das Staufachmodul aus Figur 1, wobei das Staufach in Richtung der geschlossenen Position verschoben ist.
Figur 6 zeigt das Staufachmodul aus Figur 1 inklusive angeschlossenen PSUs und geschlossenem Staufach.
Figur 7 zeigt eine Explosionsdarstellung eines Staufachmoduls mit Gehäuse, PSUs und Staufach gemäß einer Ausführungsform der Erfindung.
Figur 8 zeigt eine isometrische Darstellung eines Staufachs vor der Montage in einem Gehäuse eines Staufachmoduls.
Figur 9 zeigt die Anordnung von Führungsrollen an einem Staufach in einer Führungsschiene.
Figur 10 zeigt eine schematische Darstellung, welche die Bewegungen des Staufachs zwischen der geschlossenen und der offenen Position zeigt.
Figur 11 ist eine isometrische Darstellung einer exemplarischen Führungsschiene.
Figur 12 illustriert die unterschiedlichen Phasen beim Öffnen eines Staufachs gemäß der Erfindung.
Figur 13 ist eine Detailansicht eines exemplarischen Ventils.
Figur 14 zeigt ein Staufachmodul gemäß einer weiteren Ausführungsform der Erfindung.

### Detaillierte Beschreibung der Ausführungsformen

Im Gegensatz zu der sehr zeitaufwendigen und unergonomischen Installation eines kompletten Staufachmoduls mit anschließend zu installierendem Versorgungskanal (oder auch eines kompletten vorkonfigurierten Staufachmoduls) wird hier der Montageablauf nach den spezifischen Bedürfnissen einer Staufachmodul-Montage in einem beengten Flugzeugrumpf und die notwendige individuelle Bestückung des Versorgungskanals in zwei logische Arbeitsschritte gesplittet. Durch die verbesserte Zugänglichkeit sind diese Arbeitsschritte erheblich beschleunigt und in Arbeit erleichternder Position zu erledigen.

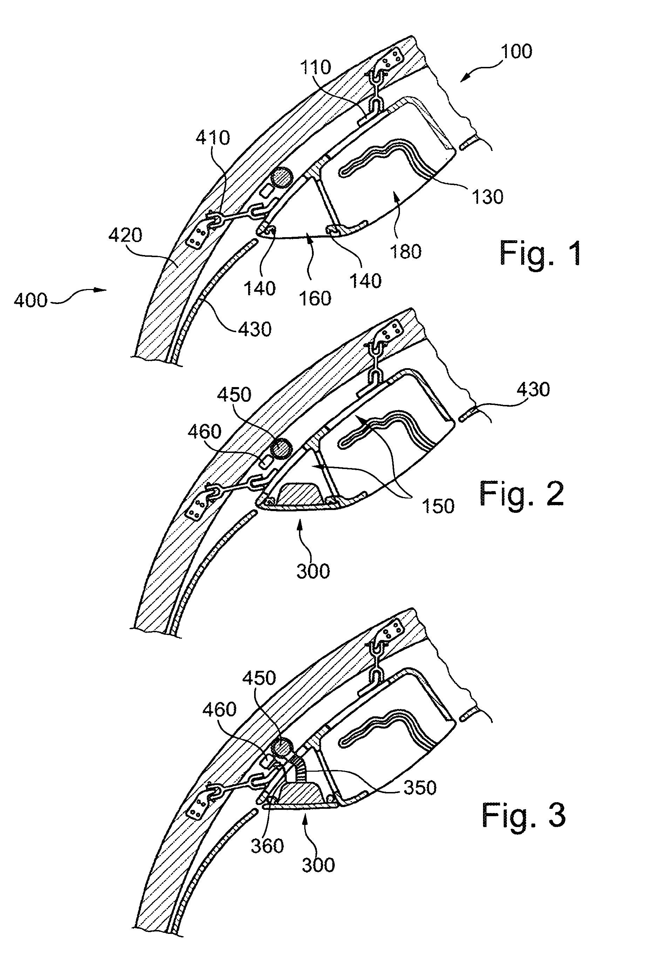

Zuerst wird, wie in Figur 1 dargestellt, ein Staufachmodul-Gehäuse 100, welches als Schubkastengehäuse (Sandwich) oder Trägergehäuse (Metall oder CFK) zur Aufnahme der Führungsschienen 130 für das Staufach ausgeführt sein kann, sowie zur Aufnahme der Passenger Service Channel (PSC)-Schienen 140 für die Passenger Service Units (PSUs) 300 an der Struktur 400 des Flugzeugs über zum Beispiel einstellbare Tie-rods befestigt. Die Durchgriffsöffnung bzw. Durchgriffsöffnungen 150, welche großzügig gestaltet sein können, zum Erreichen der Befestigungselemente 110, 410 auf der Strukturseite des Staufachmodul-Gehäuses 100 erleichtern das Montieren und Ausrichten des Gehäuses erheblich. Eine ergonomische Zwei-Mann-Montage ist durch das halbierte Gewicht und die griffgünstige Kontur sowie die frontale Zugänglichkeit der Befestigungselemente gegeben.

Im Allgemeinen zeigt Figur 1 ein Staufachmodul-Gehäuse 100, welches an einer Rumpfstruktur eines Flugzeugs befestigt ist. Die Flugzeug-Struktur 400 weist Halterungen 410 auf, an welchen ein Staufachmodul befestigt werden kann. Ferner weist die Flugzeug-Struktur 400 eine Wandung 420 sowie eine Innenverkleidung 430 auf. Das Staufachmodul weist Befestigungselemente 110 auf, welche mit den Befestigungselementen 410 der Flugzeugstruktur 400 in Eingriff bringbar sind. Das Staufachmodul-Gehäuse 100 weist ferner an der Innenwand eines Staufach-Aufnahmeraums 180 zwei Führungsschienen 130 zur Aufnahme eines Staufachs auf. Ferner sind an dem Gehäuse 100 Schienen 140 vorgesehen, an welchen die PSUs 300 eingeklickt werden können. In der Schnittansicht der Figur 1 sind ein Staufachmodulgehäuse 100 und eine Flugzeugstruktur 400 erkennbar, wobei das Staufachmodulgehäuse Durchgriffsöffnungen 150 zwischen dem Staufach-Aufnahmeraum 180 und dem Passagier-Versorgungskanal 160 aufweist. Solche können auch in der Rückwand des Gehäuses 100 im Bereich des Staufach-Aufnahmeraums 180 sowie des Passagier-Versorgungskanals 160 angeordnet sein.

In der Darstellung in Figur 2 ist der Versorgungskanal 160 mit einem PSU 300 bestückt, wobei das PSU in horizontaler Endposition in den Schienen 140 verrastet ist. Eine Zwischen-Installationsstufe mit anschließendem Klappen der PSUs, wie bei der herkömmlichen Montage, ist hierbei nicht erforderlich. Das in die Schienen 140 des Gehäuses 100 des Staufachmoduls eingeklickte PSU befindet sich im montierten Zustand in der Nähe der Versorgungsleitungen 450 und 460, welche an der Innenseite der Außenwand 420 der Flugzeugstruktur 400 angeordnet sind.

Wie in Figur 3 erkennbar, ist durch die Durchgriffsöffnung 150 zwischen dem Staufach-Aufnahmeraum 180 und dem Passagier-Versorgungskanal 160 ein einfaches und ergonomisches Verbinden der PSU-Anschlüsse mit dem Elektrik-, Sauerstoff- und Individual-Air-Anschlüssen 450, 460 in Augenhöhe möglich. Es sei angemerkt, dass eine erhebliche Gewichtsersparnis dadurch ermöglicht wird, dass die Passenger-Service-Units (PSUs) weder klappbare Scharniere noch Kabel- oder Schlauchüberlängen mit entsprechenden Scheuerschutzhüllen und deren separate Halter zum Anbinden erforderlich sind. Dadurch, dass das Verbinden der PSUs in deren tatsächlicher Endposition erfolgt, wird ein einfaches und sicheres Arbeiten gewährleistet.

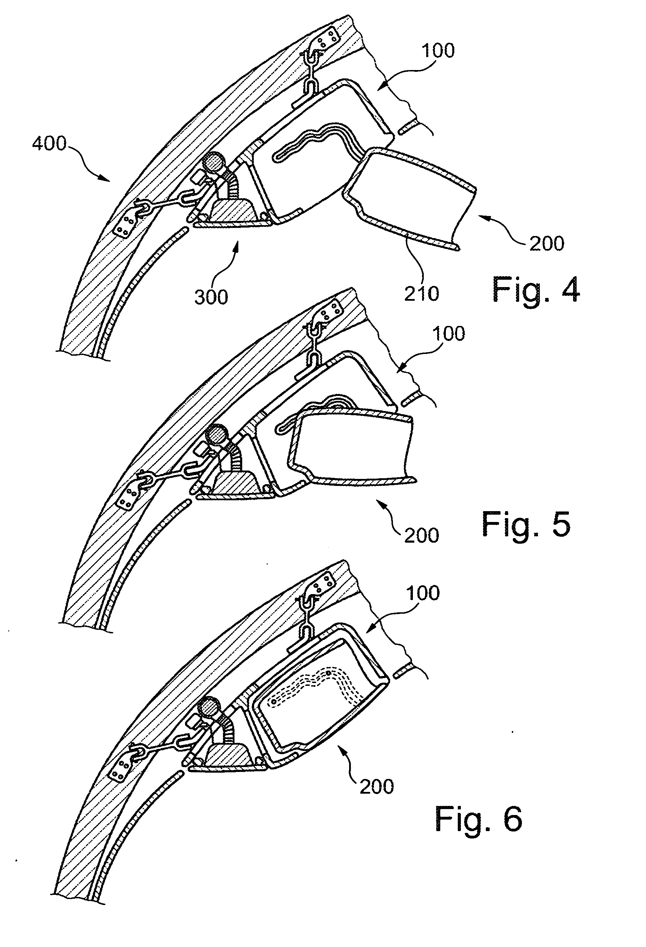

Wie in Figur 4 dargestellt, wird im Anschluss an die in den Figuren 1 bis 3 dargestellten Montage-Zuständen das Staufach 200 mit einer Außenseite 210, mittels Einführung der an den Staufachseiten befindlichen Rollen 230 in die Führungsschienen 130 des Gehäuses 100 montiert. Hierbei können sogenannte Einführschrägen an den Führungsschienen 130 eine Selbstfindung und eine Ein-Mann-Montage des Staufachs 200 ermöglichen. Sobald das zweite Rollenpaar eingeführt ist, können die Enden der Führungsschienen mit sogenannten konischen Verschlussstopfen (als Gegenstück zu den Einführschrägen) verschlossen werden. Diese Verschlussstopfen 120 können mittels Madenschrauben gehalten werden und sind zugleich mit Gummidämpfern zur Anschlagsdämpfung ausgeführt.

In Figur 5 ist das Staufach 200 in geöffneter Position (Anschlag der Rollen an den Verschlussstopfen in den Führungsschienenenden) dargestellt. Einerseits ist hierbei erkennbar, dass das Staufach 200 in einer Position angeordnet ist, in welcher beispielsweise ein Handgepäckstück leicht in horizontaler Richtung in das Staufach hineingelegt werden kann. Ferner ist erkennbar, dass die Durchgriffsöffnungen sowie die Kabel und Schläuche der PSU und deren Rückseite sowie die Kinematik (Führungsschienen und Rollen) nach der Montage des Staufachs für die Passagiere aufgrund gleichbleibender Bewegungsspalte in X-Richtung und kleiner Systemspalte in Y/Z-Richtung nicht mehr zu sehen sind. Dies kann durch den speziellen Verlauf der Führungsschienen erreicht werden und gilt sowohl für den geöffneten Zustand als auch für den geschlossenen Zustand des Staufachs, sowie für jede Zwischenstellung.

In Figur 6 ist ein Staufachmodul mit einem geschlossenen Staufach dargestellt. Hier ist erkennbar, dass das Staufachmodul mit dem PSU und dem Staufach ästhetisch in das Lining des Innenraums eines Flugzeugs integrierbar ist. Ferner sind akustische Nachteile durch die geschlossene Kontur der Seitenverkleidung mit dem PSC, dem Staufachmodul-Gehäuse und dem Staufach zum Deckenlining nicht zu erwarten.

Für Servicearbeiten an den PSUs muss lediglich das Staufach ausgebaut werden, was von einer Person innerhalb weniger Sekunden erledigt werden kann.

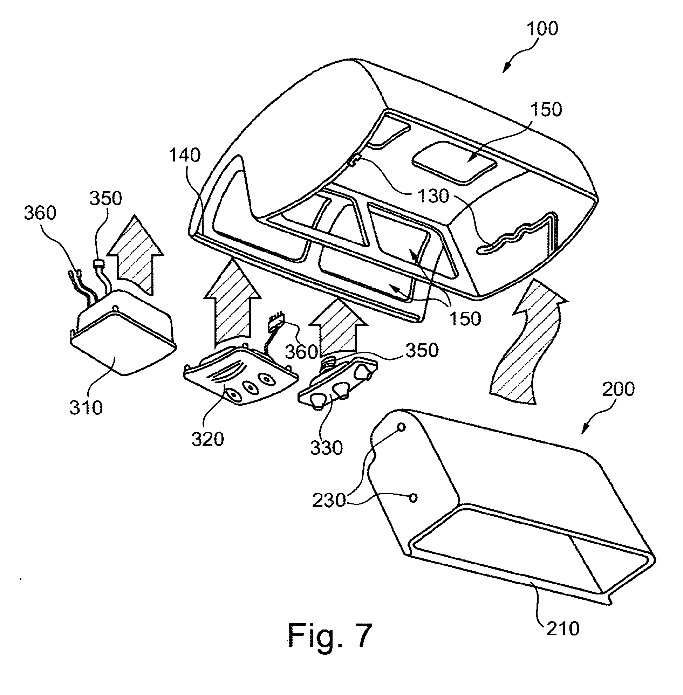

Figur 7 zeigt eine isometrische Explosionsdarstellung eines Staufachmoduls gemäß der Erfindung. Das hier dargestellte Staufachmodul mit integralem Versorgungskanal für optimierte Montage besteht aus einem fixen (starren) Staufachmodul-Gehäuse 100, ausgeführt als Schubkastengehäuse (Sandwich) oder Trägergehäuse (Metall oder CFK) zur Aufnahme der Führungsschienen 130 für das Staufach, sowie zur Aufnahme der Passenger-Service-Channel (PSC)-Schienen 140 für die Passenger-Service-Units 310, 320, 330 (PSUs). Großzügige Durchgriffsöffnungen 150 zum Erreichen der Befestigungselemente für die Montage an der Flugzeugstruktur sollen das Montieren und Ausrichten des Gehäuses 100 erheblich erleichtern. Großzügige Durchgriffsöffnungen 150 im Gehäuse zum Versorgungskanal hin sollen ein einfaches und ergonomisches Verbinden der PSUs zu den Elektrik-, Sauerstoff- und Individual-Air-Anschlüssen in Augenhöhe ermöglichen.

Das Staufach 200 selbst stellt das Sichtteil zur Kabine hin dar und verdeckt im montierten Zustand alle Kabel und Schläuche der PSUs und deren Rückseite sowie die Kinematik (Führungsschienen und Rollen) durch entsprechende geometrische Auslegung. Das Staufach besteht aus einem Schubkastengehäuse (Sandwich) mit insgesamt vier Rollen zur Lagerung in den Führungsschienen des Gehäuses. Die PSUs entsprechen funktional den gebräuchlichen in der Kabine verwendeten Bauteilen, jedoch mit dem Vorteil, dass weder klappbare Scharniere noch Kabel- oder Schlauchüberlängen mit entsprechenden Scheuerschutzhüllen und deren separater Halter zum Anwenden erforderlich sind.

Das beschriebene Staufach kombiniert die Realisierung eines komplexen Verfahrwegs auf einer geschlossenen Schiene (eine pro Seite) mit jeweils zwei Lagerpunkten (kugelgelagerte Polyamidrollen). Obwohl es sich hier um eine komplexe Bewegung des Staufachs handelt, wird eine maximale Reduzierung der Anzahl der Einzelteile durch Integration aller gewünschten Funktionen in die Formgebung eines einzigen Bauteils erreicht (Führungsschiene). Diese Führungsschiene selbst ist pro Staufachmodul in Flugzeuglängsrichtung versetzt zweimal vorhanden, jeweils als Fest- bzw. Los-Lager ausgeführt, was auch Gepäckablagen über mehrere Flugzeugspante ermöglicht. Da diese Führungsschienen an den Gehäuseseiten aus der Randfläche herausgeführt werden, ist eine einfache Ein-Mann-Montage der rollengeführten Staufächer über Selbstfindung (Einlaufschrägen) an den Schienen möglich.

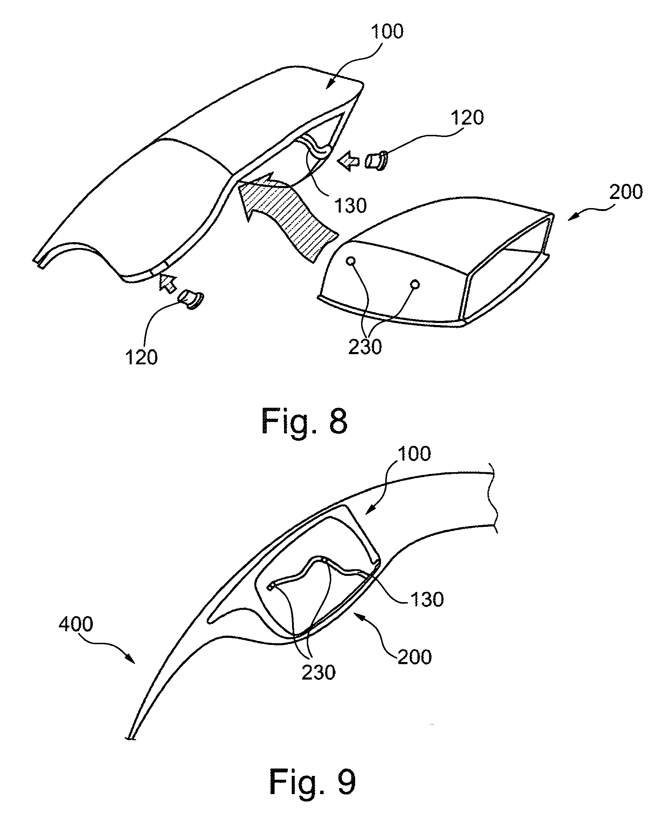

Wie in der isometrischen Darstellung in Figur 8 erkennbar, werden die Schienen 130 durch jeweils einen mit Fixierschrauben gehaltenen Verschluss- und Anschlagsstopfen 120 verschlossen, sobald die Führungsrollen 230 eines Staufachs 200 in die Führungsschienen 130 eingeführt sind.

Die Anschlagsstopfen können zur zusätzlichen Dämpfung und Endanschlag mit einem elastischen Puffer versehen sein. Da das Gehäuse getrennt von dem Staufach an der Flugzeugstruktur montiert werden kann, wird auch die Befestigung des Gehäuses durch zum Beispiel Montageöffnungen an der Rückwand wesentlich erleichtert. Diese Montageöffnungen sowie das gesamte Innenleben des Staufachmoduls sind nach der Montage des Staufachs, das auch als Sichtteil fungiert, blickgeschützt.

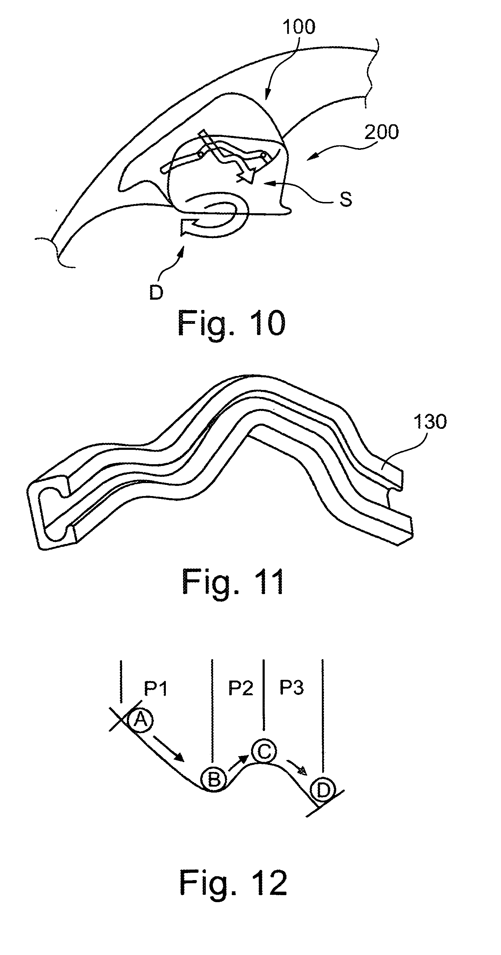

Die Führungsschiene 130 ist bezüglich der Endposition so ausgelegt, dass die geschlossene Endposition eine möglichst rumpfnahe Lage (siehe Figur 9), die geöffnete eine möglichst beladefreundliche Lage sind (siehe Figur 10). Das Konstrukt ist somit geeignet, die Schwenkbewegung optimal zu gestalten und Toträume (Schwenkbereiche) zu minimieren sowie eine möglichst großzügige Kabine in einem Flugzeug zu ermöglichen.

Besonderes Augenmerk des hier beschriebenen Staufachmoduls mit Einschub-Führungsschienen liegt hierbei aber auf dem definierten Kurvenverlauf (siehe Figur 11).

Der Verfahrweg beim Öffnen (siehe Phase P1 in Figur 12) ist so gewählt, dass der Drehpunkt zunächst fern des Schwerpunkts zur Strukturseite liegt, um ein garantiertes und schnelles selbsttätiges Öffnen des Staufachs zu gewährleisten, und kontinuierlich zum Schwenkpunkt hinwandert. Der weitere Verfahrweg beim Öffnen ist so gewählt, dass der Drehpunkt sich dem Schwerpunkt kontinuierlich annähert, um eine weitere gravitationsbedingte Beschleunigung zu unterbinden.

Der weitere Verfahrweg beim Öffnen (Phase P2 in Figur 12) führt zu einem Drehpunktwechsel über den Schwerpunkt hinweg in Richtung Passagier. Hierbei wird die Geschwindigkeit des Staufachs abgebremst, um die kinetische Energie vor Erreichen der Endposition zu tilgen.

Der weitere Verfahrweg beim Öffnen (Phase P3 in Figur 12) ist nun so gewählt, dass der Drehpunkt zurück über den Schwerpunkt der Strukturseite wandert, um eine sichere Lagerung des Staufachs in voll geöffneter Endposition zu gewährleisten.

Beim Verschließen muss eben dieser Drehpunktwechsel wahrnehmbar als Rückmeldung bzw. Widerstand wieder überwunden werden. Nach Überwinden dieses Widerstands ist der Verfahrweg beim Schließen so gewählt, dass der Drehpunkt fern des Schwerpunktes auf Strukturseite wandert, das heißt, das Gewicht des Staufachs unterstützt den Passagier beim Überwinden der Masseträgheit.

Der weitere Verfahrweg bis zur endgültigen geschlossenen Position ist ferner so gewählt, dass nach Erreichen einer gewissen Bewegungsenergie durch die vorherige Beschleunigungsphase das endgültige Verschließen mit geringer Handkraft zu realisieren ist. Durch Nutzung der kinetischen Energie bleiben die erforderlichen Handkräfte somit in einem angenehmen Rahmen. Der physikalische Effekt, der hier nutzbar gemacht wird, erklärt sich im Wesentlichen durch ein definiertes Wechselspiel zwischen potentieller und kinetischer Energie (siehe Figur 12).

Es wird angemerkt, dass die Schritte des Verfahrens zur Installation eines Staufachmoduls gemäß der Erfindung, welche in den Figuren 1 bis 6 dargestellt sind, lediglich Haupt-Schritte sind, wobei diese Haupt-Schritte in Unter-Schritte differenziert oder unterteilt werden können. Außerdem können ebenfalls Unter-Schritte zwischen den Haupt-Schritten vorgenommen werden. Ein Unter-Schritt wird nur dann als solcher erwähnt, wenn dieser Schritt wichtig für das Verständnis der Prinzipien des Verfahrens gemäß der Erfindung ist.

Obwohl es sich um eine komplexe Bewegung des Staufachs handelt, wird eine maximale Bauteilreduktion realisiert, bei gleichzeitiger Integration wesentlicher gewünschter Effekte. Zusammenfassend ermöglicht damit die Verwendung zweier Schienen, vierer Lagerrollen eine optimale Ergonomie, einen geringen Platzbedarf, eine einfache Installation, eine dynamische Dämpfung beim Öffnen sowie eine dynamische Handkraft-Unterstützung beim Schließen.

Hinsichtlich der Montage ermöglicht die Gestaltung des Staufachmoduls ein Splitten des Moduls in zwei Bauteile, nämlich das Gehäuse und das Staufach, welche für eine Montage optimiert getrennt werden. Montage und Serviceprobleme, welche bei der herkömmlichen Bauweise auftreten, werden auf diese Weise beseitigt. Die Montage des Gehäuses ist durch die frontale Erreichbarkeit der Befestigungs- und Einstellelemente stark vereinfacht. Die PSUs müssen nicht klappbar ausgeführt werden und sind fix montiert, bevor sie mit den Versorgungsleitungen in der Flugzeugstruktur verbunden werden.

Durch das Staufachmodul gemäß der Erfindung wird eine Bauteilreduktion erzielt sowie eine Gewichtsersparnis. Eine einfache Installation des Staufachmoduls wird möglich, eine schnelle Installation des Versorgungskanals ohne Zwischenschritte, eine sichere Installation des Versorgungskanals mit entsprechender Gewichtsreduktion, sowie keine Vorinstallation außerhalb des Flugzeugs ist erforderlich. Die Variabilität und Flexibilität des Versorgungskanals bleibt erhalten, Testroutinen des Versorgungskanals bleiben erhalten, Toleranzprobleme des Versorgungskanals in Flugzeugrichtung (Strukturtoleranzen) können durch Toleranzpaneele gelöst werden, geschlossene Konturen von der Seitenverkleidung, dem PSC, dem Staufachgehäuse und dem Staufach zum Deckenlining sind möglich, und schließlich ist auch ein griffloses Design aufgrund der schwerkraftbedingten Selbstöffnung des Staufachs möglich (Entriegelung über push-to-open).

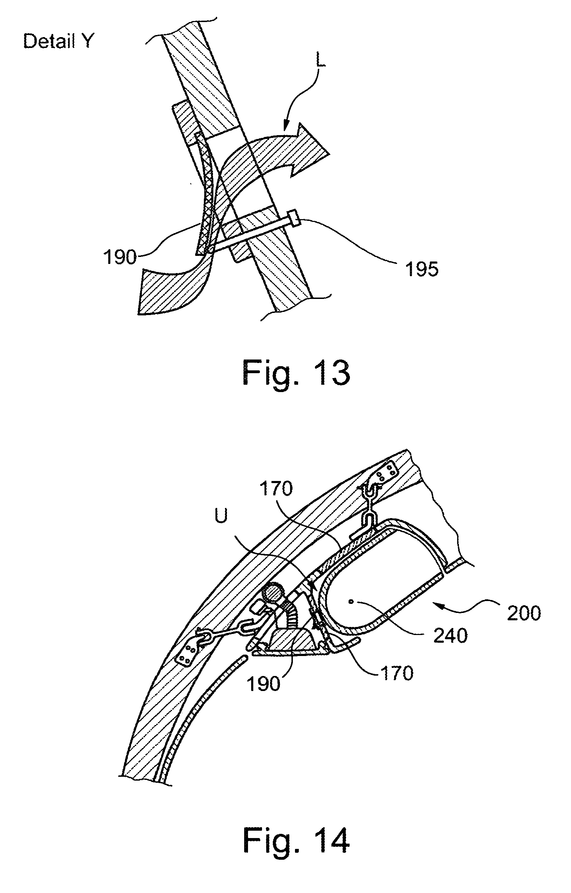

Figur 13 ist eine Detailansicht eines exemplarischen Ventils 190, welches entweder in einer Wand des Staufach-Aufnahmeraums oder in einer Verschlussklappe 170 vorgesehen sein kann. Das dargestellte Ventil weist eine Ventilklappe 190 und eine Einstellschraube 195 auf. Die Ventilklappe 190 kann eine gelenkig gelagerte steife Klappe oder eine flexible Membran sein. Mittels der Einstellschraube 195 kann erreicht werden, dass die Klappe 190 nicht vollständig schließt, es kann somit eine Mindest-Öffnung eingestellt werden. Auf diese Weise kann dafür gesorgt werden, dass bei einem Luftdruck-Unterschied, der einen Luftfluss L (wie dargestellt) bewirkt, die Menge der in einer bestimmten Zeit hindurch-strömenden Luft mittels der Einstellschraube einstellbar ist. Sobald ein Luftdruck-Unterschied vorliegt, der einen entgegengesetzten Luftfluss bewirkt, wird der Luftstrom die Klappe weiter öffnen, womit der Luftstrom im Wesentlichen durch die Größe der Durchlassöffnung bestimmt wird.

Je nach Orientierung und Einstellung des Ventils kann damit die Luft-Dämpfung der Bewegung eines Staufachs beim Öffnen bzw. beim Schließen desselben beeinflusst bzw. eingestellt werden.

Figur 14 zeigt ein Staufachmodul gemäß einer anderen Ausführungsform der Erfindung. Bei diesem Staufachmodul ist das Staufach 200 mittels einer Achse 240 gelagert, sodass das Staufach einer kreisförmigen Bewegungskurve bzw. Schwenkbewegung zwischen dem offenen und dem geschlossenen Zustand folgt. Entsprechend sind der Staufach-Aufnahmeraum und das Staufach so gestaltet, dass ebenfalls während einer Bewegung des Staufachs ein gleichmäßiger Spalt zwischen Gehäuse und Staufach ausgebildet ist, mit den oben beschriebenen Vorteilen.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist.

Andere Variationen der offenbarten Ausführungsform können durch einen Fachmann beim Umsetzen der beanspruchten Erfindung verstanden und bewirkt werden, aus einem Studium der Zeichnungen, der Offenbarung und der anhängenden Ansprüche. In den Ansprüchen schließt das Wort "aufweisend" nicht andere Elemente oder Schritte aus, und der unbestimmte Artikel "ein" schließt eine Mehrzahl nicht aus.

Alleinig der Umstand, dass bestimmte Merkmale in verschiedenen abhängigen Ansprüchen genannt sind, soll nicht anzeigen, dass eine Kombination dieser Merkmale nicht vorteilhaft eingesetzt werden kann. Die Bezugszeichen in den Ansprüchen sollen nicht den Umfang der Ansprüche beschränken.

### Bezugszeichenliste

- 100: Gehäuse des Staufachmoduls
- 110: Befestigungselement
- 120: Verschlussstopfen
- 130: Lagerungselement
- 140: Befestigungsschiene
- 150: Durchgriffsöffnung
- 160: Passagier-Versorgungskanal
- 170: Verschlussplatte
- 180: Staufach-Aufnahmeraum
- 190: Ventil
- 195: Einstellschraube
- 200: Staufach
- 210: Staufachwand
- 230: Führungselement
- 240: Lagerungselement
- 300: Passagier-Versorgungselement (PSU)
- 310, 320, 330: unterschiedliche PSUs
- 350, 360: Anschlüsse
- 400: Flugzeugstruktur
- 410: Befestigungselement
- 420: Außenwand
- 430: Innenverkleidung
- 450, 460: Versorgungsleitungen
- S: Bewegung des Schwerpunktes
- D: Bewegung des individuellen Drehpunktes
- U: Unterdruckreservoir
- L: Luftfluss

## Patentansprüche

1. Staufachmodul aufweisend:
ein Gehäuse (100) mit einem Staufach-Aufnahmeraum (180) und einem Passagier-Versorgungskanal (160), wobei an den Seitenwänden des Staufach-Aufnahmeraums jeweils ein Lagerungselement (130) angeordnet ist und wobei in einer Wand des Gehäuses zwischen dem Staufach-Aufnahmeraum und dem Passagier-Versorgungskanal eine Durchgriffsöffnung (150) ausgebildet ist,
ein Staufach (200) mit seitlich angeordneten Führungselementen (230), welche in Eingriff mit den Lagerungselementen (130) bringbar sind, und
zumindest ein Passagier-Versorgungselement (300).

2. Staufachmodul nach Anspruch 1, wobei eine Durchgriffsöffnung (150) in einer Rückwand des Gehäuses (100) ausgebildet ist.

3. Staufachmodul nach Anspruch 1, wobei die Lagerungselemente (130) am Staufach-Aufnahmeraum Führungsschienen sind und wobei die Führungselemente (230) des Staufachs (200) Rollen sind, wobei an beiden Seiten des Staufachs jeweils zwei Rollen derart angeordnet sind, dass das Staufach zwischen einer offenen und einer geschlossenen Position entlang der Führungsschienen (130) bewegbar ist.

4. Staufachmodul nach Anspruch 3, wobei das Gehäuse (100) ferner einen Verschlussstopfen (120) aufweist, welcher geeignet ist, ein Ende einer Führungsschiene (130) zu verschließen.

5. Staufachmodul nach Anspruch 1, wobei das zumindest eine Passagier-Versorgungselement (300) ein Element aus der Gruppe ist, die umfasst: Sauerstoff-Versorgungsbox, Lautsprecher, Kopfhörerbuchse, Leuchte, Luftauslass für Luftversorgung, USB-Buchse, Computerbuchse und Verkleidungsteil.

6. Staufachmodul nach Anspruch 1, ferner aufweisend eine Verriegelung, so dass das Staufach (200) in einer geschlossenen Stellung in dem Gehäuse (100) arretierbar ist.

7. Staufachmodul nach Anspruch 1, wobei das Staufachmodul formschlüssig in das Lining des Innenraums eines Flugzeugs integrierbar ist.

8. Staufachmodul nach Anspruch 1, wobei der Bewegungsweg des Staufachs (200) so bestimmt ist, dass in jeder Position des Staufachs zwischen einer offenen und einer geschlossenen Position, ein im Wesentlichen konstanter Spalt zwischen einer Außenseite (210) des Staufachs und einem Rand des Gehäuses (100) gebildet wird.

9. Staufachmodul nach Anspruch 1, welches ferner zumindest eine Verschlussplatte (170) aufweist, mit Hilfe derer zumindest eine Durchgriffsöffnung (150) verschließbar ist.

10. Staufachmodul nach Anspruch 9, wobei die Verschlussplatte (170) oder die Wand des Staufach-Aufnahmeraums ein Ventil (190) aufweist.

11. Verwendung eines Staufachmoduls nach einem der Ansprüche 1 bis 10 in einem Flugzeug oder Fahrzeug.

12. Flugzeug mit einem Staufachmodul nach einem Ansprüche 1 bis 10.

13. Verfahren zur Installation eines Staufachmoduls nach einem der Ansprüche 1 bis 10 in einem Flugzeug, wobei das Verfahren die Schritte aufweist:
- Befestigen des Gehäuses (100) des Staufachmoduls an der Struktur (400) des Flugzeugs,
- Einsetzen des zumindest einen Passagier-Versorgungselements (300) in den Passagier-Versorgungskanal (160) des Gehäuses (100),
- Verbinden etwaiger Anschlüsse (350, 360) des Passagier-Versorgungselements (300) mit Versorgungsleitungen (450, 460) des Flugzeugs,
- Einsetzen eines Staufachs (200) in den Staufach-Aufnahmeraum (180) des Gehäuses (100), wobei Führungselemente (230) an dem Staufach (200) in Lagerungselemente (130) des Gehäuses (100) eingreifen.

## Claims

1. A hatrack module comprising:
a housing (100) with a hatrack accommodation space (180) and a passenger service channel (160), wherein a bearing element (130) is arranged on each of the sidewalls of the hatrack accommodation space, and wherein a wall of the housing, between the hatrack accommodation space and passenger service channel, comprises a reach-through access opening (150),
a hatrack (200) with laterally arranged guide elements (230) being engagable with the bearing elements (130), and
at least one passenger service unit (300).

2. The hatrack module of claim 1, wherein a reach-through access opening (150) is situated in a rear wall of the housing (100).

3. The hatrack module of claim 1, wherein the bearing elements (130) on the hatrack accommodation space are guide rails, and wherein the guide elements (230) of the hatrack (200) are rollers, wherein on each side of the hatrack two rollers are arranged in such a manner that the hatrack is movable along the guide rails (130) between an open position and a closed position.

4. The hatrack module of claim 3, wherein the housing (100) further comprises a locking plug (120) that is suitable for closing one end of a guide rail (130).

5. The hatrack module of claim 1, wherein the at least one passenger service unit (300) is an element from the group consisting of an oxygen supply box, a loudspeaker, a headphone jack, a light, an air outlet for the air supply, a USB connector, a computer connector, and a panel.

6. The hatrack module of claim 1, further comprising a locking device so that the hatrack (200) is lockable in a closed position in the housing (100).

7. The hatrack module of claim 1, wherein the hatrack module can be integrated in a positive-locking manner in the lining of the interior of an aircraft.

8. The hatrack module of claim 1, wherein the movement path of the hatrack (200) is determined in such a manner that in any position of the hatrack between an open position and a closed position there is an essentially constant gap between an outside (210) of the hatrack and an edge of the housing (100).

9. The hatrack module of claim 1, further comprising at least one closing plate (170), by means of which at least one reach-through access opening (150) can be closed.

10. The hatrack module of claim 9, wherein the closing plate (170) or the wall of the hatrack accommodation space comprises a valve (190).

11. Use of a hatrack module of any one of claims 1 to 10 in an aircraft or vehicle.

12. An aircraft comprising a hatrack module of any one of claims 1 to 10.

13. A method for installing a hatrack module of any one of claims 1 to 10 in an aircraft, wherein the method comprises the steps of:
- attaching the housing (100) of the hatrack module to a structure (400) of the aircraft,
- inserting an at least one passenger service unit (300) in the passenger service channel (160) of the housing (100),
- connecting any connections (350, 360) of the passenger service unit (300) with supply lines (450, 460) of the aircraft,
- inserting a hatrack (200) in the hatrack accommodation space (180) of the housing (100), wherein guide elements (230) on the hatrack (200) engage the bearing elements (130) of the housing (100).

## Revendications

1. Module compartiment de rangement présentant :
- un boîtier (100) avec un espace de logement de compartiment de rangement (180) et un canal de service passagers (160), un élément palier (130) étant respectivement disposé sur les parois latérales de l'espace de logement de compartiment de rangement, et une ouverture de passage de main (150) étant agencée dans une paroi du boîtier entre l'espace de logement de compartiment de rangement et le canal de service passagers,
- un compartiment de rangement (200) avec des éléments de guidage (230) disposés latéralement qui peuvent venir en prise avec les éléments paliers (130), et
- au moins un élément de service passagers (300).

2. Module compartiment de rangement selon la revendication 1, une ouverture de passage de main (150) étant agencée dans une paroi arrière du boîtier (100).

3. Module compartiment de rangement selon la revendication 1, les éléments paliers (130) sur l'espace de logement de compartiment de rangement étant des rails de guidage et les éléments de guidage (230) du compartiment de rangement (200) étant des galets, deux galets étant respectivement disposés sur les deux côtés du compartiment de rangement de telle sorte que le compartiment de rangement peut être déplacé entre une position ouverte et une position fermée le long des rails de guidage (130).

4. Module compartiment de rangement selon la revendication 3, le boîtier (100) présentant en outre un bouchon (120) adapté pour fermer une extrémité d'un rail de guidage (130).

5. Module compartiment de rangement selon la revendication 1, l'au moins un élément de service passagers (300) étant un élément du groupe qui comprend : boîtier d'alimentation en oxygène, haut-parleur, casque audio, liseuse, sortie d'air pour l'alimentation en air, port USB, connecteur pour ordinateur et élément d'habillage.

6. Module compartiment de rangement selon la revendication 1, présentant en outre un verrouillage, de telle sorte que le compartiment de rangement (200) peut être bloqué dans une position fermée dans le boîtier (100).

7. Module compartiment de rangement selon la revendication 1, le module compartiment de rangement pouvant être intégré par complémentarité dans la garniture de l'espace intérieur d'un avion.

8. Module compartiment de rangement selon la revendication 1, la trajectoire du compartiment de rangement (200) étant définie de telle sorte qu'un interstice essentiellement constant entre une face extérieure (210) du compartiment de rangement et un bord du boîtier (100) se forme dans chaque position du compartiment de rangement entre une position ouverte et une position fermée.

9. Module compartiment de rangement selon la revendication 1, qui présente en outre au moins une plaque de fermeture (170), à l'aide de laquelle au moins une ouverture de passage de main (150) peut être fermée.

10. Module compartiment de rangement selon la revendication 9, la plaque de fermeture (170) ou la paroi de l'espace de logement de compartiment de rangement présentant une soupape (190).

11. Utilisation d'un module compartiment de rangement selon l'une des revendications 1 à 10 dans un avion ou un véhicule.

12. Avion avec un module compartiment de rangement selon l'une des revendications 1 à 10.

13. Procédé d'installation d'un module compartiment de rangement selon l'une des revendications 1 à 10 dans un aéronef, le procédé présentant les étapes suivantes :
- fixation du boîtier (100) du module compartiment de rangement à la structure (400) de l'avion,
- insertion de l'au moins un élément de service passagers (300) dans le canal de service passagers (160) du boîtier (100),
- connexion de raccordements (350, 360) éventuels de l'élément de service passagers (300) avec des câbles d'alimentation (450, 460) de l'avion,
- insertion d'un compartiment de rangement (200) dans l'espace de logement de compartiment de rangement(180) du boîtier (100), des éléments de guidage (230) sur le compartiment de rangement (200) s'engrenent dans des éléments paliers (130) du boîtier (100).
